# EUROPÄISCHE PATENTSCHRIFT

(11) **EP 2 755 783 B1**
(45) Veröffentlichungstag und Bekanntmachung des Hinweises auf die Patenterteilung: **22.01.2020**
(21) Anmeldenummer: 12762201.7
(22) Anmeldetag: 14.08.2012
(51) Int. Cl.: B22D 17/22, B29C 45/27

(54) **DRUCKGUSSWERKZEUG MIT ANGUSSSYSTEM SOWIE ANGUSSSYSTEM**
DIE CASTING TOOL HAVING A GATING SYSTEM, AND GATING SYSTEM
OUTIL DE COULÉE SOUS PRESSION MUNI D'UN SYSTÈME D'ENTRÉE AINSI QUE SYSTÈME D'ENTRÉE

(30) Priorität: 16.09.2011 DE 102011113370
(43) Veröffentlichungstag der Anmeldung: 23.07.2014
(73) Patentinhaber: KSM Castings Group GmbH, 31137 Hildesheim (DE)
(72) Erfinder: SCHIRM, Wolfgang-Michael, 31188 Holle (DE); HOFMEISTER, Jürgen, 31134 Hildesheim (DE); BÖSHANS, Viktor, 31180 Giesen (DE); GIESEKE, Jörg, 31089 Duingen (DE)
(74) Vertreter: Patentanwälte Thömen & Körner
(86) Internationale Anmeldenummer: PCT/DE2012/100240
(87) Internationale Veröffentlichungsnummer: WO 2013/037358

(56) Entgegenhaltungen:
- DE-A1-102011 108 564
- DE-B- 1 290 672
- JP-A- 2002 331 347
- JP-A- 2008 178 896
- US-A1- 2003 041 995
- US-B1- 6 382 302

## Beschreibung

Die Erfindung bezieht sich auf ein Druckgusswerkzeug mit einem Angusssystem.

Druckgießen, welches im weiteren Sinn auch das Spritzgießen umfasst, ist bekanntermaßen ein Urformverfahren, bei dem ein auf die Gussbauteilgröße abgestimmte Menge an fließfähigem Gießwerkstoff in ein öffen- und schließbares Druckgusswerkzeug einer Druckgussmaschine eingebracht wird.

Bekannte Druckgussmaschinen weisen üblicherweise zwei gegenüberliegende, vertikal stehende Aufspannplatten auf, von denen die eine ortsfest und die andere parallel zur ortsfest gehaltenen Aufspannplatte beweglich antreibbar ist. Auf jeder der einander zugekehrten Seiten der Aufspannplatten des Druckgusswerkzeuges ist eine Werkzeughälfte des Druckgusswerkzeuges aufgespannt. Jede Werkzeughälfte kann ihrerseits aus mehreren Werkzeugteilen bestehen. Die beiden Werkzeughälften sind entlang einer vertikalen Formteilungsebene bzw. Trennebene geteilt. Die ortsfeste Werkzeughälfte ist auf der sogenannten Angussseite angeordnet, während die bewegliche Werkzeughälfte sich auf der Ausstoßer- bzw. Auswerferseite befindet.

Die vom Druckgusswerkzeug bzw. den Werkzeughälften ausgebildete Gießform mit Formhohlraum bzw. Formkavität, welche die negative Kontur des Gussbauteils abbildet, wird mit fließfähigem Gießwerkstoff, insbesondere mit einem Leichtwerkstoff, vorzugsweise mit einem Leichtmetall, gefüllt und ausgeformt. Anschließend erstarrt das gegossene Bauteil bis zur Handhabbarkeit des Gussbauteils. Nach dem Erstarren des Gussbauteils wird dieses aus der Gießform entnommen. Die Druckgussmaschine fährt zu diesem Zweck die beiden Werkzeughälften auseinander. Das Gussbauteil verbleibt zunächst in der Ausstoßerseite und wird mit einer separaten Ausstoßvorrichtung ausgeworfen.

Weiterhin umfasst das Druckgusswerkzeug den so genannten Anguss bzw. das so genannte Angusssystem, um den von der Gießkammer kommenden und während des Gießvorganges beschleunigten und mit Druck beaufschlagten fließfähigen Gießwerkstoff aufzunehmen und in den Werkzeughohlraum zu leiten. Der Anguss, insbesondere dessen Gestalt und Anbindung an das Gussbauteil, beeinflusst den Werkzeugfüllvorgang und damit auch die Qualität des Gussbauteils.

Üblicherweise besteht der Anguss bzw. das Angusssystem aus verschiedenen Segmenten. So umfasst das Angusssystem den Angusskegel, der auch als Angusszapfen oder Angussstange bezeichnet wird, weiterhin ein oder mehrere Angussverteilerkanäle, die auch als Angusskanäle oder Angussspinne bezeichnet werden, und einen Angusssteg, dessen Querschnitt am Eintritt in das Gussbauteil "Anschnitt" genannt wird. Für letzteren ist auch die Bezeichnung Anbindung gebräuchlich.

Neben den vorgenannten Druckgusswerkzeugen sind auch Dreiplattenwerkzeuge bekannt. Bei diesen Dreiplattenwerkzeugen liegen Gussbauteil und Angusssystem in verschiedenen Werkzeugebenen. Die beiden Werkzeughälften, also die bereits vorgenannte anguss- und die ausstoßseitige Werkzeughälfte, werden durch eine Zwischenplatte, die bei der Werkzeugöffnungsbewegung eine weitere Trennebene freilegt, voneinander getrennt. Da sich das Druckgusswerkzeug durch die Zwischenplatte quasi in drei Baugruppen unterteilen lässt, wird dieses als Dreiplattenwerkzeug bezeichnet. Der Anguss bzw. das Angusssystem des Dreiplattenwerkzeugs ist ein sich zwangsläufig selbst abtrennendes Angusssystem, das vom Gussbauteil durch die Öffnungsbewegung des Dreiplattenwerkzeugs getrennt wird. Beim Öffnungsvorgang wird das Dreiplattenwerkzeug zuerst in der ersten und dann in der zweiten Trennebene geöffnet, so dass das Gussbauteil und das Angusssystem, letzteres zumindest teilweise, getrennt sind.

Aus der JP 2008 178896 A ist ein Druckgusswerkzeug mit einem speziellen Angusssystem bekannt. DE 1 290 672 B offenbart ein Druckgusswerkzeug mit einem weiteren speziellen Angusssystem.

Ausgehend von diesem Stand der Technik liegt der Erfindung die Aufgabe zugrunde ein Druckgusswerkzeug mit einem Anguss bzw. Angusssystem zur Herstellung eines optimierten Gussbauteils bereitzustellen, wobei die Optimierung im Wesentlichen im Oberflächenaussehen bzw. der Oberflächenbeschaffenheit, in den mechanischen Eigenschaften und der Maßgenauigkeit des Gussbauteils liegen soll. Eine weitere Aufgabe der Erfindung besteht darin, ein Druckgusswerkzeug mit einem Anguss bzw. Angusssystem dahingehend zu verbessern, dass die Formfüllung des Druckgusswerkzeugs, insbesondere zur Herstellung von Gussbauteilen, welche einen im Wesentlichen rotationssymmetrischen Abschnitt aufweisen, und/oder solche, die an vorgegebenen Stellen Materialanhäufungen aufweisen, und/oder insbesondere Motorlager, qualitativ, insbesondere in Bezug auf das Gussbauteil, verbessert wird.

Diese Aufgabe wird durch die Merkmale des Patentanspruchs 1 gelöst. Vorteilhafte Ausgestaltungen und Weiterbildungen der Erfindung ergeben sich aus den Unteransprüchen.

Ausgehend von einem Druckgusswerkzeug, insbesondere Dreiplattenwerkzeug, mit einem Angusssystem zur Aufnahme und Weiterleitung eines fließfähigen Gießwerkstoffs zur Herstellung eines Gussbauteils, umfassend einen Angusskegel, einen oder mehrere mit dem Angusskegel verbundene Angussverteilerkanäle sowie einen oder mehrere mit dem oder den Angussverteilerkanälen verbundene Angussstege, ist erfindungsgemäß vorgesehen, dass der Angusskegel zunächst in wenigstens einen, vorzugsweise nur einen, den fließfähigen Gießwerkstoff umlenkenden Angussvorverteilerkanal übergeht, der dann in wenigstens einen, den fließfähigen Gießwerkstoff umlenkenden Angussverteilerkanal übergeht, und dass dieser Angussverteilerkanal in eine Art zentrale Angussverteilerstelle mündet, von der aus mehrere Angussweiterverteilerkanäle abgehen, die jeweils in wenigstens einen, vorzugsweise tatsächlich nur in einen, den fließfähigen Gießwerkstoff umlenkenden Angusssteg übergehen, wobei die Angussstege die Verbindung bzw. den Eintritt zum Gussbauteil bilden wobei die Längsachse des Angusskegels senkrecht auf der Werkzeugebene steht und wobei die Längsachse der Angussstege im Wesentlichen senkrecht zur Werkzeugebene steht, wobei der wenigstens eine Angussverteilerkanal, die Angussverteilerstelle und die Angussweiterverteilerkanäle im Wesentlichen in einer Ebene liegen.

Mit einem solchen Druckgusswerkzeug bzw. mit einem solchen erfindungsgemäßen Anguss bzw. Angusssystem lässt sich eine Gussbauteil mit optimierten Eigenschaften hinsichtlich des Oberflächenaussehens bzw. der Oberflächenbeschaffenheit, der mechanischen Eigenschaften und der Maßgenauigkeit des herstellen. Anstelle eines von der zentralen Angusserteilerstelle abgehenden Angussstegs verbessern die erfindungsgemäß vorgesehenen, von der zentralen Angussverteilerstelle zuvor abgehenden Angussweiterverteilerkanäle die Formfüllung des Druckgusswerkzeugs. Insbesondere lassen sich Gussbauteile herstellen, welche einen im Wesentlichen rotationssymmetrischen Abschnitt aufweisen und/oder an vorgegebenen Stellen Materialanhäufungen aufweisen. Vorzugsweise lassen sich mit einem solchen Druckgusswerkzeug in ihren Eigenschaften optimierte Motorlager herstellen.

Bevorzugt ist ein Angussvorverteilerkanal, der den fließfähigen Gießwerkstoff vom Angusskegel um etwa 90° umlenkt. Während der Angusskegel im Wesentlichen senkrecht auf der Werkzeugebene steht, wird so der fließfähige Gießwerkstoff zunächst um parallel zur Werkzeugebene geführt. Von diesem vorzugsweise eine Angussvorverteilerkanal können nun ein oder mehrere Angussverteilkanäle abzweigen, wobei bevorzugt jeweils ein Angussverteilerkanal einem Gussbauteil zugeordnet ist, wenn mit einem Druckgusswerkzeug mehrere Gussbauteile gleichzeitig gegossen werden. Bei größeren Gussbauteilen kann es aber auch von Vorteil sein, wenn mehrere Angussverteilerkanäle einem Gussbauteil zugeordnet sind.

Es kann zweckmäßig sein, wenn der wenigstens eine Angussvorverteilerkanal und der wenigstens eine Angussverteilerkanal, die Angussverteilerstelle und die Angussweiterverteilerkanäle im Wesentlichen in einer Ebene liegen.

Es kann - wie bereits ausgeführt - von Vorteil sein, wenn jedem Angussverteilerkanal ein Gussbauteil zugeordnet ist. So kann sichergestellt werden, dass alle mit einem Druckgusswerkzeug gleichzeitig gegossenen Gussbauteile eine gleiche Qualität haben, wobei die Angussverteilerkanäle - sofern mehrere vorgesehen sind - vorzugsweise gleiche Abmessungen aufweisen sollten.

Es kann vorteilhaft sein, wenn die von der zentralen Angussverteilerstelle abgehenden Angussweiterverteilerkanäle unterschiedlich oder vorzugsweise im Wesentlichen mit gleichen Abmessungen ausgebildet sind. Weisen sie gleiche Abmessungen auf, kann damit eine gleichmäßige Formfüllung sichergestellt werden. Bei unsymmetrischen Gussbauteilen und Gussbauteilen mit unsymmetrischen Materialanhäufungen können gegebenenfalls aber auch unterschiedliche Abmessungen der Angussweiterverteilerkanäle von Nutzen sein.

Es kann zweckmäßig sein, wenn der Angusssteg im Endbereich des Angussweiterverteilerkanals angeordnet ist.

Es kann zweckmäßig sein, wenn an einigen, vorzugsweise an allen Stellen des Angusssystems, an denen der fließfähige Gießwerkstoff eine Umlenkung erfährt, insbesondere im Bereich des Übergangs von Angusskegel zum wenigstens einen Angussvorverteilerkanal bzw. zum wenigstens einen Angussverteilerkanal, im Bereich des Übergangs vom wenigstens einen Angussvorverteilerkanal zum wenigstens einen Angussverteilerkanal und/oder Bereich des Übergangs Angussweiterverteilerkanal zum Angusssteg, wenigstens ein, vorzugsweise nur ein Sackloch vorgesehen ist. Dadurch lässt sich insbesondere die Oberflächenqualität des Gussbauteils steigern.

Insbesondere für die Formfüllung kann es von Vorteil sein, wenn die zentrale Angussverteilerstelle kein Sackloch aufweist.

Es kann vorteilhaft sein, wenn die Angussstege trichterförmig ausgebildet sind, wobei das konisch verjüngte Ende vorzugsweise in Richtung Gussbauteil weist.

Es kann insbesondere für das Gussgefüge des Gussbauteils zweckmäßig sein, wenn die Angussstege an denjenigen Stellen des Gussbauteils eintreten, die eine größere Gießwerkstoffanhäufung aufweisen sollen.

Es kann insbesondere für das Gussgefüge des Gussbauteils vorteilhaft sein, wenn die Angussstege bei einem Gussbauteil mit im Wesentlichen rotationssymmetrischen Abschnitt in diesem Abschnitt eintreten.

Eine besonders gutes Gussgefüge des Gussbauteils kann vorteilhaft erhalten werden, wenn die Angussstege bei einem Gussbauteil mit rotationssymmetrischen Abschnitt gleichmäßig oder vorzugsweise ungleichmäßig voneinander beabstandet auf der Stirnseite, vorzugsweise am Umfang, des Abschnitts eintreten. Bei einem Motorlager mit einem rotationssymmetrischen Abschnitt hat sich beispielsweise eine ungleichmäßige Verteilung von vier Angussstegen als optimal erwiesen.

Es kann von Vorteil sein, wenn der Gießwerkstoff ein Leichtwerkstoff ist.

Für bestimmte Einsatzzwecke kann es von Vorteil sein, wenn der Leichtwerkstoff ein Kunststoff ist.

Für gewisse Einsatzzwecke kann es von Vorteil, wenn der Leichtwerkstoff ein Leichmetall ist.

Für bestimmte Anwendungsfälle kann es von Vorteil sein, wenn das Leichmetall eine Aluminiumlegierung ist. Für gewisse Anwendungsfälle kann es von Vorteil sein, wenn das Leichmetall eine Magnesiumlegierung ist. Für einzelne Anwendungsfälle kann es von Vorteil sein, wenn das Leichmetall eine Zinklegierung ist.

Es kann von Vorteil sein, wenn das Gussbauteil ein Fahrwerksteil, insbesondere ein Querträger, ein Vorder- oder Hinterachshilfsrahmen, eine Vorder- oder Hinterachskonsole, ein Gussknoten, ein Querlenker oder ein Führungslenker ist.

Es kann von Vorteil sein, wenn das Gussbauteil der Pedalbock eines Fußhebellagerwerks ist.

Es kann von Vorteil sein, wenn das Gussbauteil eine Lenkungskomponente, insbesondere ein Lenkgehäuse, ein Crashschlitten, eine Konsole, eine Mantelrohrführung, ein Lenkradskelett oder ein Manifold für die elektronische Lenkradverstellung ist.

Es kann von Vorteil sein, wenn das Gussbauteil ein Rahmenstrukturteil eines Kraftfahrzeugs, insbesondere eine A/B-Säule, ein Scharnierhalter, ein Längsträger, eine Rahmenaufnahme, ein Rahmengussknoten oder eine Dämpferaufnahme ist.

Es kann von Vorteil sein, wenn das Gussbauteil ein Strukturbauteil für ein Kraftfahrzeug, insbesondere ein Türinnenelement oder Klappenelement ist.

Es kann von Vorteil sein, wenn das Gussbauteil eine Motorkomponente, insbesondere ein Zylinderkopf, ein Zylinderkopfdeckel oder ein Kurbelgehäuse ist.

Es kann von Vorteil sein, wenn das Gussbauteil ein Motorträger, eine Motorkonsolen, eine Drehmomentstütze oder vorzugsweise ein Motorlager ist.

Es kann von Vorteil sein, wenn das Gussbauteil ein Motorperipherie-Teil, insbesondere ein Einspritzpumpengehäuse, ein Ölfiltergehäuse und Deckel, ein Ölpumpengehäuse und Deckel, ein Wasseranschlussstutzen, ein Wasserpumpengehäuse und Deckel, ein Steuergehäuse, ein Leiterrahmen, eine Kipphebellagerbrücke oder ein Lagerrahmen ist.

Es kann von Vorteil sein, wenn das Gussbauteil eine Ölwanne ist.

Es kann von Vorteil sein, wenn das Gussbauteil eine Getriebekomponente, insbesondere ein Außenlamellenträger, eine Kolbenführung, ein Planetenträger, ein Schiebergehäuse, ein Leitrad, ein Mittenträger, eine Getriebetrommel oder ein Getriebe- und Zwischengehäuse ist.

Es kann von Vorteil sein, wenn das Gussbauteil eine Kupplungskomponente, insbesondere ein Kupplungsgehäuse oder ein Differentialgehäuse und Deckel ist.

Es kann zweckmäßig sein, wenn bei einem Dreiplattenwerkzeug die Angussstege in der Zwischenplatte angeordnet sind.

Es kann von Vorteil sein, wenn bei einem Dreiplattenwerkzeug das Angusssystem, mit Ausnahme des größten Teils der Angusstege und gegebenenfalls des Angusskegel, im Wesentlichen in der zweiten Trennebene angeordnet sind.

Es kann vorteilhaft sein, wenn bei einem Dreiplattenwerkzeug der Angusssteg derart ausgebildet ist, dass der Anguss bzw. das Angussystem direkt am Gussbauteil abreißt.

Es kann aber auch vorteilhaft sein, wenn bei einem Dreiplattenwerkzeug der Angusssteg derart ausgebildet ist, dass der Anguss bzw. das Angussystem so abreißt, dass der Angusssteg zumindest teilweise stehen bleibt.

Die Erfindung betrifft außerdem einen erfindungsgemäßen Anguss bzw. Angussystem nach einem der vorhergehenden Ansprüche zur Verwendung in einem Gusswerkzeug.

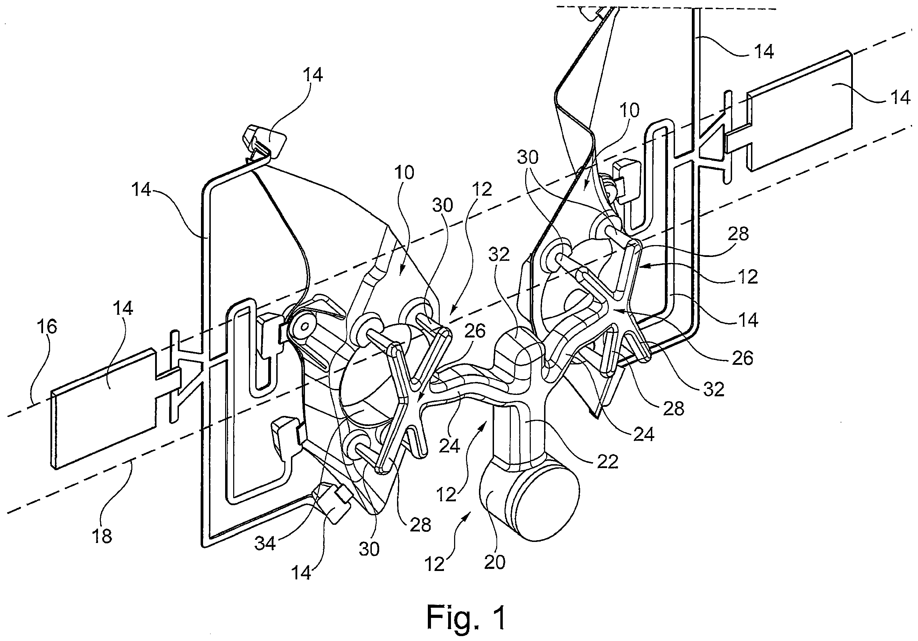

Weitere vorteilhafte Ausgestaltungen der Erfindung ergeben sich auch aus der nachfolgenden Beschreibung eines erfindungsgemäßen Ausführungsbeispiels und der zugehörigen Zeichnung. In dieser zeigt die einzige Fig. 1 eine perspektivische Ansicht zweier Gussbauteile 10, nämlich von Motorlagern, mit dem daran angeordneten, noch nicht abgetrennten erfindungsgemäßen Angusssystem 12 und mit verschiedener Überlaufstellen und -kanälen 14, hergestellt in einem Dreiplattenwerkzeug, welches der besseren Übersicht halber hier nicht dargestellt ist. Gleichwohl sind die beiden dem Dreiplattenwerkzeug zuzuordnenden Trennebenen, nämlich eine erste Trennebene 16 und eine zweite Trennebene 18 schematisch angedeutet.

Das erfindungsgemäße, hier nicht dargestellte Dreiplattenwerkzeug weist einen senkrecht auf der Werkzeugebene stehenden Angusskegel 20 auf, der zunächst in einen, den fließfähigen Gießwerkstoff vertikal nach oben, also parallel zur Werkzeugebene, umlenkenden Angussvorverteilerkanal 22 übergeht.

Von diesem Angussvorverteilerkanal 22 gehen nunmehr nach Art eines "Y" zwei, den fließfähigen Gießwerkstoff umlenkende Angussverteilerkanäle 24 ab. Jeder Angussverteilerkanal 24 ist hierbei für ein Gussbauteil 10 vorgesehen.

Der Angussverteilerkanal 24 mündet in eine Art zentrale Angussverteilerstelle 26, die - wie vorliegend - im Wesentlichen rund ausgebildet ist. Selbstverständlich kann die Angussverteilerstelle 26 auch eine andere Form aufweisen. Vorteilhaft sollte die Form derart gewählt sein, dass die von der Angussverteilerstelle 24 abzweigenden bzw. abgehenden Angussweiterverteilerkanäle 28 gleichzeitig und vorteilhaft gleichmäßig mit fließfähigem Gießwerkstoff füllbar sind. Die Angussweiterverteilerkanäle 28 gehen schließlich jeweils in einen, den fließfähigen Gießwerkstoff nunmehr erneut um etwa 90° umlenkenden Angusssteg 30 über. Die Angussstege 30 bilden hierbei die Verbindung bzw. den Eintritt zum Gussbauteil 10. Die Längsachse der Angussstege 30 steht hierzu im Wesentlichen senkrecht zur Werkzeugebene.

Gut zu erkennen ist, dass der Angussvorverteilerkanal 22, die Angussverteilerkanäle 24, die zentralen Angussverteilerstellen 26 und die Angussweiterverteilerkanäle 28 im Wesentlichen in einer Ebene liegen.

Erfindungsgemäß weisen die von der zentralen Angussverteilerstelle 26 abgehenden Angussweiterverteilerkanäle 28 im Wesentlichen gleiche Abmessungen auf, um eine gleichmäßige Formfüllung sicherzustellen.

Weiterhin sind an einigen Stellen des Angusssystems 12, nämlich dort, wo der fließfähige Gießwerkstoff eine Umlenkung erfährt, Sacklöcher 32 vorgesehen. Dies ist insbesondere der Fall im Bereich des Übergangs vom wenigstens einen Angussvorverteilerkanal 22 zum den beiden Angussverteilerkanälen 24 und Bereich des Übergangs vom Angussweiterverteilerkanal 28 zum Angusssteg 30.

Die zentrale Angussverteilerstelle 26 kann vorteilhaft ohne Sackloch auskommen.

Die Angussstege 30 sind trichterförmig ausgebildet, wobei das konisch verjüngte Ende vorteilhaft in Richtung Gussbauteil 10 weist.

Die Angussstege 30 treten an den Stellen des Gussbauteils 10 ein, die eine größere Gießwerkstoffanhäufung aufweisen sollen, insbesondere sind solche Materialanhäufungen an Stellen vorgesehen, die später als Befestigungsstellen am Gussbauteil dienen können und/oder einer stärkeren Belastung ausgesetzt sind.

Zudem ist bei den vorliegenden Gussbauteilen 10 ein im Wesentlichen rotationssymmetrischer Abschnitt 34 zu erkennen, wobei die Angussstege vorteilhaft ungleichmäßig voneinander beabstandet auf der Stirnseite, vorzugsweise im Bereich des Umfangs des rotationssymmetrischer Abschnitts 34 eintreten.

Vorteilhaft kann das Gussbauteil 10, hier ein Motorlager, aus einem Leichmetall, vorzugsweise aus einer Aluminiumlegierung bestehen.

Bei dem hier nicht weiter dargestellten Dreiplattenwerkzeug ist das Angusssystem, mit Ausnahme des größten Teils der Angusstege und des Angusskegel, im Wesentlichen in der zweiten Trennebene 18 angeordnet.

## Patentansprüche

1. Druckgusswerkzeug, insbesondere Dreiplattenwerkzeug, mit einem Angusssystem (12) zur Aufnahme und Weiterleitung eines fließfähigen Gießwerkstoffs zur Herstellung eines Gussbauteils (10), umfassend einen Angusskegel (20), einen oder mehrere mit dem Angusskegel (20) verbundene Angussverteilerkanäle (24) sowie einen oder mehrere mit dem oder den Angussverteilerkanälen (24) verbundene Angussstege (30), **dadurch gekennzeichnet, dass** der Angusskegel (20) zunächst in wenigstens einen, vorzugsweise nur einen, den fließfähigen Gießwerkstoff umlenkenden Angussvorverteilerkanal (22) übergeht, der dann in wenigstens einen, den fließfähigen Gießwerkstoff umlenkenden Angussverteilerkanal (24) übergeht, und dass der Angussverteilerkanal (24) in eine Art zentrale Angussverteilerstelle (26) mündet, von der aus mehrere Angussweiterverteilerkanäle (28) abgehen, die jeweils in wenigstens einen, vorzugsweise in nur einen, den fließfähigen Gießwerkstoff umlenkenden Angusssteg (30) übergehen, wobei die Angussstege (30) die Verbindung bzw. den Eintritt zum Gussbauteil bilden, wobei die Längsachse des Angusskegels (20) senkrecht auf der Werkzeugebene steht und wobei die Längsachse der Angussstege (30) im Wesentlichen senkrecht zur Werkzeugebene steht, wobei der wenigstens eine Angussverteilerkanal (24), die Angussverteilerstelle (26) und die Angussweiterverteilerkanäle (28) im Wesentlichen in einer Ebene liegen.

2. Druckgusswerkzeug nach Anspruch 1, **dadurch gekennzeichnet, dass** der wenigstens eine Angussvorverteilerkanal (22) und der wenigstens eine Angussverteilerkanal (24), die Angussverteilerstelle (26) und die Angussweiterverteilerkanäle (28) im Wesentlichen in einer Ebene liegen.

3. Druckgusswerkzeug nach Anspruch 1 oder 2, **dadurch gekennzeichnet, dass** jedem Angussverteilerkanal (24) ein Gussbauteil (10) zugeordnet ist.

4. Druckgusswerkzeug nach einem der Ansprüche 1 bis 3, **dadurch gekennzeichnet, dass** die von der zentralen Angussverteilerstelle (26) abgehenden Angussweiterverteilerkanäle (28) mit gleichen Abmessungen ausgebildet sind.

5. Druckgusswerkzeug nach einem der Ansprüche 1 bis 4, **dadurch gekennzeichnet, dass** der Angusssteg (30) im Endbereich des Angussweiterverteilerkanals (28) angeordnet ist.

6. Druckgusswerkzeug nach einem der Ansprüche 1 bis 5, **dadurch gekennzeichnet, dass** an einigen, vorzugsweise an allen Stellen des Angusssystems (12), an denen der fließfähige Gießwerkstoff eine Umlenkung erfährt, insbesondere im Bereich des Übergangs von Angusskegel (20) zum wenigstens einen Angussvorverteilerkanal (22) bzw. zum wenigstens einen Angussverteilerkanal (24), im Bereich des Übergangs vom wenigstens einen Angussvorverteilerkanal (22) zum wenigstens einen Angussverteilerkanal (24) und/oder Bereich des Übergangs Angussweiterverteilerkanal (28) zum Angusssteg (30), wenigstens ein, vorzugsweise nur ein Sackloch (32) vorgesehen ist.

7. Druckgusswerkzeug nach einem der Ansprüche 1 bis 6, **dadurch gekennzeichnet, dass** die zentrale Angussverteilerstelle (26) kein Sackloch aufweist.

8. Druckgusswerkzeug nach einem der Ansprüche 1 bis 7, **dadurch gekennzeichnet, dass** die Angussstege (30) trichterförmig ausgebildet sind, wobei das konisch verjüngte Ende vorzugsweise in Richtung Gussbauteil weist.

9. Druckgusswerkzeug nach einem der Ansprüche 1 bis 8, **dadurch gekennzeichnet, dass** die Angussstege (30) an den Stellen des Gussbauteils eintreten, die eine größere Gießwerkstoffanhäufung aufweisen sollen.

10. Druckgusswerkzeug nach einem der Ansprüche 1 bis 9, **dadurch gekennzeichnet, dass** die Angussstege (30) bei einem Gussbauteil (10) mit im Wesentlichen rotationssymmetrischen Abschnitt (34) in diesem Abschnitt (34) eintreten.

11. Druckgusswerkzeug nach Anspruch 10, **dadurch gekennzeichnet, dass** die Angussstege (30) bei einem Gussbauteil (10) mit rotationssymmetrischem Abschnitt (34) ungleichmäßig voneinander beabstandet auf der Stirnseite, vorzugsweise am Umfang, des Abschnitts (34) eintreten.

12. Druckgusswerkzeug nach einem der Ansprüche 1 bis 11, **dadurch gekennzeichnet, dass** bei einem Dreiplattenwerkzeug die Angussstege (30) in der Zwischenplatte angeordnet sind.

13. Druckgusswerkzeug nach einem der Ansprüche 1 bis 12, **dadurch gekennzeichnet, dass** bei einem Dreiplattenwerkzeug das Angusssystem (12), mit Ausnahme des größten Teils der Angussstege (30) und des Angusskegel (20), im Wesentlichen in der zweiten Trennebene angeordnet sind.

## Claims

1. Die casting tool, in particular a three-plate tool, having a gating system (12) for receiving and passing on a flowable casting material for the production of a cast component (10), comprising a gating cone (20), one or more gating distributor channels (24) connected to the gating cone (20), as well as one or more gating sprues (30) connected to the gating distributor channel or channels (24), **characterized in that** the gating cone (20) first goes over into at least one, preferably only one, gating pre-distributor channel (22), which deflects the flowable casting material and then goes over into at least one gating distributor channel (24), which deflects the flowable casting material, and **in that** the gating distributor channel (24) opens out into a kind of central gating distributor location (26), from which there extend multiple gating re-distributor channels (28), which go over in each case into at least one, preferably into only one, gating sprue (30), which deflects the flowable casting material, wherein the gating sprues (30) form the connection or the entry to the cast component, wherein the longitudinal axis of the gating cone (20) is perpendicular to the plane of the tool and wherein the longitudinal axis of the gating sprues (30) is substantially perpendicular to the plane of the tool, wherein the at least one gating distributor channel (24), the gating distributor location (26) and the gating pre-distributor channels (28) lie substantially in one plane.

2. Die casting tool according to Claim 1, **characterized in that** the at least one gating pre-distributor channel (22) and the at least one gating distributor channel (24), the gating distributor location (26) and the gating re-distributor channels (28) lie substantially in one plane.

3. Die casting tool according to Claim 1 or 2, **characterized in that** each gating distributor channel (24) is assigned a casting component (10).

4. Die casting tool according to one of Claims 1 to 3, **characterized in that** the gating re-distributor channels (28) extending from the central gating distributor location (26) are formed with the same dimensions.

5. Die casting tool according to one of Claims 1 to 4, **characterized in that** the gating sprue (30) is arranged in the end region of the gating re-distributor channel (28) .

6. Die casting tool according to one of Claims 1 to 5, **characterized in that** at least one, preferably only one, blind hole (32) is provided at some, preferably at all, of the locations of the gating system (12) at which the flowable casting material undergoes a deflection, in particular in the region of the transition from the gating cone (20) to the at least one gating pre-distributor channel (22) or to the at least one gating distributor channel (24), in the region of the transition from the at least one gating pre-distributor channel (22) to the at least one gating distributor channel (24) and/or the region of the transition from the gating re-distributor channel (28) to the gating sprue (30).

7. Die casting tool according to one of Claims 1 to 6, **characterized in that** the central gating distributor location (26) does not have a blind hole.

8. Die casting tool according to one of Claims 1 to 7, **characterized in that** the gating sprues (30) are formed in a funnel shape, wherein the conically narrowed end preferably points in the direction of the cast component.

9. Die casting tool according to one of Claims 1 to 8, **characterized in that** the gating sprues (30) enter at the locations of the cast component that are intended to have a greater accumulation of cast material

10. Die casting tool according to one of Claims 1 to 9, **characterized in that**, in the case of a cast component (10) having a substantially rotation-symmetrical portion (34), the gating sprues (30) enter in this portion (34).

11. Die casting tool according to Claim 10, **characterized in that**, in the case of a cast component (10) having a rotation-symmetrical portion (34), the gating sprues (30) enter on the face side, preferably at the circumference, of the portion (34), spaced apart from one another non-uniformly.

12. Die casting tool according to one of Claims 1 to 11, **characterized in that**, in the case of a three-plate tool, the gating sprues (30) are arranged in the intermediate plate.

13. Die casting tool according to one of Claims 1 to 12, **characterized in that**, in the case of a three-plate tool, the gating system (12), with the exception of the major part of the gating sprues (30) and of the gating cone (20), is arranged substantially in the second parting plane.

## Revendications

1. Outil de moulage sous pression, en particulier outil à trois plaques, comprenant un système d'entrée (12) destiné à recevoir et faire passer une matière de moulage fluide pour produire un composant moulé (10), ledit outil comprenant une carotte (20), au moins un canal d'alimentation (24) relié à la carotte (20), et au moins une barrette d'entrée (30) reliée à l'au moins un canal d'alimentation (24), **caractérisé en ce que** la carotte (20) fusionne tout d'abord avec au moins un, de préférence un seul, canal d'alimentation antérieur (22) qui dévie la matière de moulage fluide et qui fusionne ensuite avec le canal d'alimentation (24) qui dévie la matière de moulage fluide, et **en ce que** le canal d'alimentation (24) débouche dans une sorte de site d'alimentation central (26) d'où partent une pluralité de canaux d'alimentation (28) qui fusionnent chacun avec au moins une, de préférence une seule, barrette d'entrée (30) qui dévie la matière de moulage fluide, les barrettes d'entrée (30) formant la liaison ou l'entrée menant au composant moulé, l'axe longitudinal de la carotte (20) étant perpendiculaire au plan de l'outil et l'axe longitudinal de la barrette d'entrée (30) étant sensiblement perpendiculaire au plan de l'outil, l'au moins un canal d'alimentation (24), le site d'alimentation (26) et les canaux d'alimentation postérieurs (28) étant situés sensiblement dans un plan.

2. Outil de moulage sous pression selon la revendication 1, **caractérisé en ce que** l'au moins un canal d'alimentation antérieur (22) et l'au moins un canal d'alimentation (24), le site d'alimentation (26) et les canaux d'alimentation postérieurs (28) sont situés sensiblement dans un plan.

3. Outil de moulage sous pression selon la revendication 1 ou 2, **caractérisé en ce que** chaque canal d'alimentation (24) est associé à un composant moulé (10).

4. Outil de moulage sous pression selon l'une des revendications 1 à 3, **caractérisé en ce que** les canaux d'alimentation postérieurs (28) partant du site d'alimentation central (26) sont conçus avec les mêmes dimensions.

5. Outil de moulage sous pression selon l'une des revendications 1 à 4, **caractérisé en ce que** la barrette d'entrée (30) est disposée dans la région d'extrémité du canal d'alimentation postérieur (28).

6. Outil de moulage sous pression selon l'une des revendications 1 à 5, **caractérisé en ce qu'**au moins un, de préférence un seul, trou borgne (32) est ménagé en certains endroits, de préférence en tous les endroits, du système d'entrée (12) où la matière de moulage fluide subit une déviation, notamment dans la région de transition allant de la carotte (20) à l'au moins un canal de pré-alimentation (22) ou à l'au moins un canal d'alimentation (24), dans la région de transition allant d'au moins un canal d'alimentation antérieur (22) à l'au moins un canal d'alimentation (24) et/ou la région de transition allant du canal d'alimentation postérieur (28) à la barrette d'entrée (30).

7. Outil de moulage sous pression selon l'une des revendications 1 à 6, **caractérisé en ce que** le site d'alimentation central (26) ne comporte pas de trou borgne.

8. Outil de moulage sous pression selon l'une des revendications 1 à 7, **caractérisé en ce que** les barrettes d'entrée (30) sont en forme d'entonnoir, l'extrémité en cône pointant de préférence en direction du composant moulé.

9. Outil de moulage sous pression selon l'une des revendications 1 à 8, **caractérisé en ce que** les barrettes d'entrée (30) pénètrent au niveau des sites du composant moulé qui doivent avoir une plus grande accumulation de matière de moulage.

10. Outil de moulage sous pression selon l'une des revendications 1 à 9, **caractérisé en ce que**, dans le cas d'un composant moulé (10) pourvu d'une portion (34) sensiblement à symétrie de rotation, les barrettes d'entrée (30) pénètrent dans cette portion (34).

11. Outil de moulage sous pression selon la revendication 10, **caractérisé en ce que**, dans le cas d'un composant moulé (10) pourvu d'une portion (34) à symétrie de rotation, les barrettes d'entrée (30) pénètrent, en étant espacées irrégulièrement les unes des autres, du côté avant, de préférence à la périphérie, de la portion (34).

12. Outil de moulage sous pression selon l'une des revendications 1 à 11, **caractérisé en ce que**, dans le cas d'un outil à trois plaques, les barrettes d'entrée (30) sont disposées dans la plaque intermédiaire.

13. Outil de moulage sous pression selon l'une des revendications 1 à 12, **caractérisé en ce que**, dans le cas d'un outil à trois plaques, le système d'entrée (12) est disposé sensiblement dans le deuxième plan de séparation à l'exception de la plupart des barres d'entrée (30) et de la carotte (20).
